# EUROPEAN PATENT SPECIFICATION

(11) **EP 0 323 009 B1**
(45) Date of publication and mention of the grant of the patent: **05.01.1994**
(21) Application number: 88309868.3
(22) Date of filing: 20.10.1988
(51) Int. Cl.: C04B 41/65, C04B 41/00, C04B 28/02

(54) **Cement-containing ceramic articles and method for production thereof**
Zement enthaltende keramische Gegenstände und Verfahren zu ihrer Herstellung
Articles céramiques contenant du ciment et procédé pour leur fabrication

(30) Priority: 26.12.1987 JP 331776/87
(43) Date of publication of application: 05.07.1989
(73) Proprietor: INAX CORPORATION, Tokoname-Shi Aichi (JP)
(72) Inventor: Kawai, Kazuyuki, Tokoname-shi Aichi (JP); Goto, Kazumasa, Tokoname-shi Aichi (JP); Shirai, Takayuki Furumichi Kojo, Tokoname-shi Aichi (JP)
(74) Representative: Beresford, Keith Denis Lewis

(56) References cited:
- EP-A- 0 078 046
- EP-A- 1 168 631
- US-A- 2 562 477
- CHEMICAL ABSTRACTS, vol. 104, no. 22, June 1986, page 352, abstract no. 191965s, Columbus, Ohio, US.

## Description

### BACKGROUND OF THE INVENTION

### Field of the Invention:

This invention relates to a novel cement-containing ceramic article decreased in or prevented from efflorescence and a method for production thereof, which articles consist essentially of inorganic hydraulic cement and heat-vitrifiable inorganic powder, as well as a magnesium silicate mineral, an active silica mineral and/or an aluminum silicate mineral. The ceramic articles according to the present invention are substantially prevented from efflorescence caused by the vitrifiable component and cement component, has large frost resistance, and is often increased in strength by the side effect of the mineral component contained therein. Incidentally, the moldability and shape retention of green molded articles as well as the shrinkage and deformation of the articles in the course of firing are markedly improved due to the hydraulic cement component contained therein.

### Prior Art:

Conventional pottery or porcelain articles have been produced by molding clay materials and firing the molded articles. Thus, there have been large problems in moldability and shape retention of the green molded articles, and shrinkage and deformation in the course of firing; which have been considered to be not avoidable.

In the course of research, the present inventors have developed a method which comprises molding an aqueous blend containing hydraulic cement, aggregate and a vitrifiable component such as glass powder and containing no mineral component mentioned above; substantially hydrating the cement component; and then firing the molded article to a temperature of 900°C or more. The efflorescence due to the glass powder and cement component, however, markedly appeared on the surfaces of the resulting articles. It was also desired to further increase the strength of the articles.

There has been known a method for producing a cement concrete article (e.g. Laid-open European Patent Application EP-A- 50 171); which comprises molding an aqueous blend of hydraulic cement, aggregate and preferably a calcium compound, hydrating the molded article, firing the hydrated article at a temperature of lower than 900°C, and then rehydrating the fired article. The ceramic article of the present invention, however, is quite different from such rehydrated concrete articles in strength, components and operations; the bending strength of such concrete articles being about 13 MPa. Moreover, it is noted that the inefficient step of rehydration mentioned above is not needed in the present invention.

Published patent specification FR-A-1 168 631 shows a glazed concrete article which comprises a molding a blend mixture of hydraulic cement, aggregate, pulverized glass and water; hardening the molded article; coating (e.g. spray-coating) the article with a decorating slip consisting of clay, kaolin and flux; applying a glazing agent onto the coated article; and firing the glaze-coated article to 800 ∼ 1100°C. The aggregate used therein such as sand, basalt and pozzolan has been known in the art to have mean particle sizes of about 1 to 5 mm. It is further noted that the decorating clay used therein is not blend-mixed with other concrete components, but is spray-coated in a thin layer onto the molded article. Thus the resulting fired ceramic article would inevitably suffer from heavy efflorescence as described above and as shown in the present comparative examples.

### SUMMARY OF THE INVENTION

An object of the present invention is to provide cement-containing ceramic articles and the method for production thereof wherein the above-mentioned problems were substantially solved. Other objects and features of the present invention will become clear in the following description.

According to the present invention, there is provided a method for producing a cement-containing vitreously bonded ceramic article, which comprises molding a blend mixture comprising inorganic hydraulic cement, a vitreously bonding amount of heat-vitrifiable inorganic powder, and water; preliminarily hardening the molded article by hydration; and then firing the hydrated article to a maximum temperature of not less than 1000°C:
characterized in that the blend mixture further comprises mineral powder selected from the group consisting of a magnesium silicate mineral, an active silica mineral, an aluminium silicate mineral, and mixtures thereof; the mineral powder has a mean particle size of not more than 100 µm (microns) to exhibit good sintering or reacting properties; and the mineral powder serves to decrease efflorescence appearing on the fired ceramic article.

The resulting ceramic article is decreased in or substantially prevented from efflorescence, and also is improved in strength, shrinkage and deformation in the course of firing, frost resistance, heat insulation, etc. The bending strength of the resulting ceramic article is normally 20 MPa or more.

The invention further provides a cement containing high-strength vitreously bonded ceramic article bonded cermic article improved in efflorescence appearing on the surfaces thereof: which ceramic article has been obtained by firing a preliminary hardened molded article to a temperature of not less than 1000°C, the molded article comprising inorganic hydraulic cement, heat-vitrifiable inorganic powder and a mineral powder component selected from the group consisting of a magnesium silicate mineral, an active silica mineral, an aluminium silicate mineral, and mixtures thereof; the mineral powder component having a mean particle size of not more than 100 µm (microns) to exhibit good sintering or reacting properties;
wherein the mineral powder component serves to react with basic components in the article and decrease efflorescence appearing on the fired ceramic article.

In the present invention, use of a magnesium silicate mineral powder such as serpentine, talc or mixtures thereof is preferred to increase the strength of the ceramic articles (e.g. 22 MPa or more, preferably 24 MPa or more), because a high-strength reaction product thereof with a calcium compound is readily produced in the firing.

Incidentally, the shrinkage and deformation of the fired article are substantially prevented, because the cement component forms skeletons in the hydrated molded article to be fired.

### DETAILED DESCRIPTION OF THE INVENTION

### (1) Raw Materials

The inorganic hydraulic cement means inorganic powder to be bonded together in the presence of water; and includes, for example, portland cement, alumina cement, blast furnace cement, other mixed cement, and mixtures thereof.

As aggregate which can be optionally used in the present invention, it is generally preferred to use aggregate exhibiting no large expansion upon firing such as chamotte. There can also be used conventional aggregate for cement concrete such as river sand, sea sand, silica, andesite, basalt, and hard sandstone.

The heat-vitrifiable inorganic powder is an inorganic powder forming molten vitrified substances in the course of firing; and include, for example, glass powder, frit, feldspar powder, volcanic balloon, volcanic ash, and other heat-vitrifiable igneous rock powder. The mean particle size of the powder is generally less than about 200 µm (microns) and normally less than about 100 µm (microns). Glass powder, feldspar powder or mixtures thereof are normally used in the present invention.

The mineral powder such as magnesium silicate or aluminum silicate is desired to be fine particles having the mean particle size of generally about 100 µm (microns) or less and normally about 50 µm (microns) or less (e.g. about 5∼50 µm (microns)), in view of its sintering or reacting properties at a high firing temperature. The mineral powder should be clearly distinguished from coarse aggregate for cement concrete which has no substantial sintering or reacting properties. Inci dentally, the mineral powder to be used is normally of natural origin, and a mixture or synthetic mineral powder containing similar components can also be used in the present invention.

The magnesium silicate mineral powder comprising the silicate component and magnesium oxide component includes, for example, talc powder, serpentine powder, and chlorite. Serpentine powder, talc powder or mixtures thereof are normally used in the present invention.

The active silica mineral powder or the aluminum silicate mineral powder comprising the silicate component and aluminum oxide component includes, for example, amorphous silica, finely divided silica (note: coarse silica sand for aggregate is not effective), agalmatolite powder (e.g. pyrophillite), and clay powder such as kaoline or sericite. Agalmatolite, finely divided silica, amorphous silica, or mixtures thereof are normally used in the present invention.

### (2) Quantities of the Raw Materials

A preferable range of the raw materials by weight are shown in the following tables. The raw materials are blended with water needed for molding and hydration of the cement (e.g. about 0.1∼0.5 parts by weight of water per part of the cement), and are molded into green molded articles.

| General Range of Raw Materials (Parts by weight) | |
|---|---|
| Hydraulic inorganic cement | 100 |
| Vitrifiable inorganic powder | about 50∼300 |
| Mineral powder | about 20∼400 (preferably about 50∼300) |
| Aggregate | about 500∼0 |

| Typical Range of Raw Materials (Parts by weight) | |
|---|---|
| Hydraulic inorganic cement (e.g. portland cement) | 100 |
| Vitrifiable inorganic powder (e.g. glass powder) | about 50∼200 (e.g. about 100) |
| Magnesium silicate mineral powder (e.g. serpentine) | about 50∼200 (e.g. about 100) |
| Active silica and/or aluminum silicate mineral powder (e.g. agalmatolite) | about 5∼150 (normally about 10∼100, e.g. about 50) |
| Aggregate (e.g. chamotte) | about 300∼0 (e.g. about 150) |

Incidentally, the quantities by weight of the raw materials are generally in the range of 100 parts of inorganic cement and not more than about 600 parts in the total of other raw materials.

### (3) Green Molded Articles

The above-mentioned raw materials are blended with water, kneaded and molded into desired articles. From the viewpoint of moldability and material cost, it is desired to incorporate the same or more quantity by weight of aggregate as the cement. Conventional additive can be added as necessary to the raw materials, such as binder, water-decreasing agent, plasticizer, and dispersing agent. Also, heat-resistant reinforcing inorganic fibers can be incorporated in the raw materials to increase the strength of the ceramic articles.

The blended materials are molded into desired articles by conventional methods such as press molding, vibration press molding, extrusion, cast molding, press-dewatering molding, screen molding, spray molding, or roll molding. In general, it is suitable to employ press-dewatering molding for stronger ceramic articles and extrusion molding for the articles having complicated cross-sectional shapes.

The molded articles are preliminarily hardened by hydration of the cement component by allowing the articles to stand in steam or air atmosphere for several hours to several days. The hydrated articles are then fired under the following conditions. Incidentally, glazed ceramic articles are readily obtained by coating a glaze agent suitable for the firing conditions on the desired surfaces of the hydrated articles and firing the coated articles.

### (4) Firing

In the course of firing, the vitrifiable powder in the molded article is caused to fuse and substantially permeate into the interstices of the heat-dehydrated cement-containing article, to vitreously bond the article. The cement-containing hydrated article forms cement-based skeletons, and thus shrinkage upon sintering which has not been avoidable in conventional ceramic articles can be substantially prevented by the skeletons (for example, the shrinkage is less than 2% and normally about 1% in the present ceramic article, whereas about 10% in conventional porcelain). Incidentally, the cement component dehydrated by the firing remains without rehydration and substantially serves as aggregate in the present ceramic articles. The cement component dehydrated in the firing is not substantially rehydrated, because the cement component fired at such a high temperature loses rehydration properties and the cement component is substantially covered with the vitrified component.

In addition to the use of the mineral powder component, it has been found that the firing at a maximum temperature of 1000°C or more and preferably 1100°C or more is needed to decrease efflorescence due to the vitrifiable powder component and the cement component.

Thus, the firing according to the present invention is conducted for more than several hours until the molded article to be fired reaches a desired maximum temperature and then is substantially cooled; the maximum firing temperature being generally about 1000°C or more, preferably about 1050°C or more and more preferably about 1100°C or more (e.g. about 1100 ∼1250°C), and generally lower than about 1400°C. The residence time of the articles at the maximum temperature is such a time that the vitrifiable powder is caused to fuse and substantially permeate into the interstices of the heat-dehydrated cement-containing articles; for example being about 5 minutes or more and preferably about 10 minutes or more at about 1000°C or more. Incidentally, it is difficult to achieve the features of the present invention at a conventional firing temperature of about 900°C or less. Such firing conditions are readily carried out, for example, by means of a roller hearth kiln or a tunnel kiln.

### (5) Efflorescence

According to the present invention, efflorescence appearing on the surfaces of vitreously bonded ceramic articles is decreased or substantially prevented. To the whole surface area of the ceramic article, (a) the surface area of efflorescence which is considered to be commercially feasible is 3% or less, (b) the area of efflorescence practically desirable is 1% or less, and (c) the area of efflorescence practically satisfactory is 0.5% or less.

### Embodiments

### Example 1 (Comparative)

In parts by weight, ordinary portland cement 30 parts, glass powder 30 parts, porcelain chamotte aggregate (particle size less than 2mm) 40 parts, water 16 parts and methylcellulose 1.2 parts were kneaded, and extruded into test pieces of 50 × 100 × 10mm (thick). The test pieces were preliminarily hydrated and dried in air at 105°C, and then fired in a roller hearth kiln to the maximum temperature of 850°C for 20 minutes or to 1050°C for 20 minutes, respectively. Incidentally, the bending strength of the resulting ceramic articles of 100 × 50 × 10mm in dimensions was measured under the conditions of a span 90mm and a loading velocity 2mm/minute according to Japanese Industrial Standards JIS A5209.

The ceramic article fired to 850°C showed a bending strength of 11.4 MPa, a firing shrinkage of 0.8% and an efflorescence area of about 40%. The ceramic article fired to 1050°C showed a bending strength of 21.7 MPa, a firing shrinkage of 0.9% and an efflorescence of about 20%. It has been demonstrated that the ceramic articles are not feasible in view of too much efflorescence.

### Example 2

In parts by weight, agalmatolite powder (aluminum silicate mineral) 20 parts, ordinary portland cement 20 parts, glass powder 20 parts, porcelain chamotte aggregate (particle size less than 2mm) 40 parts, water 17 parts and methylcellulose 1 part were kneaded, and extruded into test pieces of 50 × 100 × 10mm (thick). The test pieces were preliminarily hydrated and dried in air at 105°C, and then fired in a roller hearth kiln to the maximum temperature of 850°C for 20 minutes or to 1050°C for 20 minutes, respectively. The fired articles were then soaked in water for 30 minutes and treated for 7 days in saturated steam at 60°C. The bending strength of the fired ceramic articles and the steam-treated ceramic articles was measured respectively.

The ceramic article fired to 1050°C showed an efflorescence area of about 2%, a firing shrinkage of 0.8%, and a bending strength of the fired-cooled article of 22.4 MPa and that of the steam-treated article of 22.8 MPa. It has been demonstrated that the degree of efflorescence is commercially feasible, and the strength of the ceramic article does not change even after the steam treatment.

Incidentally, the ceramic article fired to 850°C for comparison showed an efflorescence area of about 5%, a firing shrinkage of 0.6%, and a bending strength of the fired-cooled article of 12.8 MPa and that of the steam-treated article of 15.8 MPa. The ceramic article was not commercially feasible with respect to both efflorescence and strength.

### Example 3

Example 2 was repeated except that there were used, as the raw materials in parts by weight, serpentine powder (magnesium silicate mineral) 20 parts, ordinary portland cement 20 parts, glass powder 20 parts, porcelain chamotte aggregate (particle size less than 2mm) 40 parts, water 17 parts and methylcellulose 1 part.

The resulting ceramic article fired to 1050°C showed an efflorescence area of about 2.5%, a firing shrinkage of 1.0%, and a bending strength of the fired-cooled article of 24.2 MPa and that of the steam-treated article of 24.0 MPa. It has been demonstrated that the degree of efflorescence is commercially feasible, and the strength of the ceramic article does not change even after the steam treatment.

Incidentally, the ceramic article fired to 850°C for comparison showed an efflorescence area of about 7%, a firing shrinkage of 0.6%, and a bending strength of the fired-cooled article of 14.2 MPa and that of the steam-treated article of 16.0 MPa. The ceramic article was not commercially feasible with respect to both efflorescence and strength.

### Example 4

The following raw materials in parts by weight were used.

| | |
|---|---|
| Ordinary portland cement | 100 |
| Serpentine powder (less than 150 mesh) (< 0.105 mm) | 50 |
| Glass powder (less than 100 mesh) (< 0.149 mm) | 125 |
| Agalmatolite powder (less than 200 mesh) (< 0.074 mm) | 25 |
| Colored chamotte aggregate (less than 16 mesh) < 1.00 mm | 200 |

The above-mentioned raw materials, methylcellulose and water were kneaded, extruded into a sheet of 50mm wide and 10mm thick, and cut to a length of 100mm to prepare test pieces. The test pieces were preliminarily hydrated, dried in air at 105°C, and fired to a maximum temperature of 1200°C for 20 minutes in a roller hearth kiln.

The resulting ceramic articles showed no efflorescence, a bending strength of 26 MPa and a firing shrinkage of 0.8%, as well as bulk density of 1.86g/cc, thermal conductivity (corresponding to heat insulation) of 0.84 W/m.k, and no change in frost resistance test (i.e. 500 cycles at -20°C and +20°C ). Thus, it has been demonstrated that the ceramic article is improved in the bulk density, firing shrinkage and heat insulation in comparison with conventional porcelain articles; and in the bulk density, strength, heat insulation and thermal resistance in comparison with conventional cement concrete articles.

### Example 5

Glaze agent slurry was spray-coated at 50mg per square centimeter in solid weight on the upper surfaces of the test pieces preliminarily hydrated and dried as prepared in Example 4. Incidentally, the glaze agent consisted, in dry weight , of feldspar 40 parts, calcium carbonate 10 parts, zinc oxide 5 parts, talc 25 parts, silica sand 10 parts and silica-containing kaoline 10 parts. The coated test pieces were fired as in Example 4 to obtain glazed ceramic articles having no efflorescence.

### Actions and Effects of the Invention

Efflorescence appearing on vitreously bonded ceramic articles is considered to be mainly caused by (a) water-soluble basic components in the heat-vitrifiable material, (b) alkaline metal compounds formed by the reaction of the basic component in the vitrifiable material with an acid component in cement, and (c) water-soluble basic compound such as CaO derived from fired cement.

In the present invention, the cement and vitrifiable material are fired in the presence of the active silicate mineral, aluminum silicate mineral and/or magnesium silicate mineral to a temperature of 1000°C or more and preferably 1100°C or more, whereby it has been found that the above-mentioned factors (a), (b) and (c) of efflorescence can be advantageously decreased and also the strength of the resulting ceramic article can be enhanced.

The reasons why the factors can be substantially eliminated have not been fully clarified, but are considered to be due to the following reasons. The factor (a) can be solved because the water-soluble basic components in the vitrifiable material are reacted at the high firing temperature and practically fixed in the resulting glass. The factor (b) can be solved because basic salts such as sodium sulfate derived from the vitrifiable material and cement react with active silicate derived from the silicate minerals to form stable compounds such as Na₂O · mCaO · nSiO₂. The above-mentioned factor (c) can be solved because the basic compou ds such as CaO derivcd from cement react at the high firing temperature with the aluminum silicate mineral and/or magnesium silicate mineral to form stable compounds such as CaO · mAl₂O₃ · nSiO₂ and/or CaO · mMgO · nSiO₂. Incidentally, the present ceramic articles are enhanced in strength, because high-temperature reaction products contained in the ceramic articles such as sintered clay minerals or the above-mentioned magnesium oxide-containing compounds are of high strength.

Thus, the present ceramic articles are advantageously provided with decrease in efflorescence, increase in strength, prevention of firing shrinkage and deformation due to cement-based skeletons, etc.

Moreover, both relatively fine pores derived from the cement concrete and relatively coarse pores derived from molten vitrifiable materials are uniformly produced in the resulting ceramic articles, because the cement concrete-based skeltons are maintained and the vitrifiable inorganic powder is fused in the course of firing the green molded articles. Because of such substantially uniform pores, the present ceramic articles are also provided with increase in frost resistance, increase in heat insulation, decrease in bulk density, etc.

## Claims

1. A method for producing a cement-containing vitreously bonded ceramic article, which comprises molding a blend mixture comprising inorganic hydraulic cement, a vitreously bonding amount of heat-vitrifiable inorganic powder, and water; preliminarily hardening the molded article by hydration; and then firing the hydrated article to a maximum temperature of not less than 1000°C:
characterized in that the blend mixture further comprises mineral powder selected from the group consisting of a magnesium silicate mineral, an active silica mineral, an aluminium silicate mineral, and mixtures thereof; the mineral powder has a mean particle size of not more than 100 µm (microns) to exhibit good sintering or reacting properties; and the mineral powder serves to decrease efflorescence appearing on the fired ceramic article.

2. The method according to claim 1, in which the mineral powder comprises a magnesium silicate mineral as well as an aluminum silicate mineral and/or an active silica mineral.

3. The method according to claim 1 or 2, in which the magnesium silicate mineral is selected from serpentine, talc and mixtures thereof, and the active silica mineral and/or aluminum silicate mineral is selected from finely divided silica, amorphous silica, agalmatolite, and mixtures thereof.

4. The method according to claim 1, 2 or 3, in which the preliminarily hydrated molded article is coated with a glaze agent on a desired surface thereof and then fired.

5. The method according to any one of claims 1 to 4, in which the raw materials for the ceramic article comprise by weight 100 parts of inorganic hydraulic cement, 50 ∼ 300 parts of vitrifiable inorganic powder, 20 ∼ 400 parts of the mineral powder, and 500 ∼ 0 parts of aggregate.

6. The method according to any one of claims 1 to 5, in which the vitrifiable inorganic powder is selected from glass powder, feldspar powder, and mixtures thereof.

7. The method according to any one of claims 1 to 6, in which the surface area of appearing efflorescence is 3% or less to the whole surface area of the ceramic article.

8. A cement containing high-strength vitreously bonded ceramic article improved in efflorescence appearing on the surfaces thereof: which ceramic article has been obtained by firing a preliminary hardened molded article to a temperature of not less than 1000°C, the molded article comprising inorganic hydraulic cement, heat-vitrifiable inorganic powder and a mineral powder component selected from the group consisting of a magnesium silicate mineral, an active silica mineral, an aluminium silicate mineral, and mixtures thereof; the mineral powder component having a mean particle size of not more than 100 µm (microns) to exhibit good sintering or reacting properties;
wherein the mineral powder component serves to react with basic components in the article and decrease efflorescence appearing on the fired ceramic article.

9. The ceramic article according to claim 8, in which the magnesium silcate mineral component is selected from serpentine, talc and mixtures thereof, and the active silica mineral and/or aluminum silicate mineral is selected from finely divided silica, amorphous silica, agalmatolite, and mixtures thereof.

10. The ceramic article according to claim 8 or 9, in which the raw materials for the ceramic article comprise by weight 100 parts of inorganic hydraulic cement, 50 ∼ 300 parts of vitrifiable inorganic powder, 20 ∼ 400 parts of the mineral powder, and 500 ∼ 0 parts of aggregate.

11. The ceramic article according to any one of claims 8 to 10, in which the surface area of appearing efflorescence is 3% or less to the whole surface area of the ceramic article.

12. The ceramic article according to any one of claims 8 to 11, in which the article has a glazed layer on a desired surface thereof.

## Patentansprüche

1. Verfahren zum Herstellen eines Zement enthaltenden, glasig gebundenen Keramikgegenstands, bei dem eine egalisierte Mischung mit einem anorganischen, wasserabbindenden Zement, einer glasig bindenden Menge eines durch Hitze verglasbaren anorganischen Pulvers sowie von Wasser geformt wird; der geformte Gegenstand vorab durch Wasserabbinden gehärtet wird; und dann der abgebundene Gegenstand bis auf eine Maximaltemperatur von nicht weniger als 1000°C gebrannt wird;
**dadurch gekennzeichnet**, daß die egalisierte Mischung ferner ein Mineralpulver enthält, das aus der Gruppe mit einem Magnesiumsilikatmineral, einem aktiven Kieselerdemineral, einem Aluminiumsilikatmineral und Mischungen derselben ausgewählt ist, wobei das Mineralpulver eine mittlere Teilchengröße von nicht mehr als 100 µm (Mikrometer) aufweist, um gute Sinter- oder Reaktionseigenschaften zu zeigen, und wobei das Mineralpulver dazu dient, Ausblühungen zu vermindern, die auf dem gebrannten Keramikgegenstand erscheinen.

2. Verfahren nach Anspruch 1, bei dem das Mineralpulver ein Magnesiumsilikatmineral, wie auch ein Aluminiumsilikatmineral und/oder ein aktives Kieselerdemineral enthält.

3. Verfahren nach Anspruch 1 oder Anspruch 2, bei dem das Magnesiumsilikatmineral aus Serpentin, Steatit und Mischungen derselben ausgewählt wird und das aktive Kieselerdemineral und/oder das Aluminiumsilikatmineral aus fein verteilter Kieselerde, amorpher Kieselerde, Agalmatolit und Mischungen derselben ausgewählt wird.

4. Verfahren nach einem der Ansprüche 1, 2 oder 3, bei der der vorab abgebundene, geformte Gegenstand mit einem Glasurmittel auf einer gewünschten Oberfläche desselben beschichtet und dann gebrannt wird.

5. Verfahren nach einem der Ansprüche 1 bis 4, bei dem die Ausgangsmaterialien für den Keramikgegenstand gewichtsmäßig 100 Teile anorganischen, wasserabbindbaren Zements, 50 - 300 Teile verglasbares, anorganisches Pulver, 20 - 400 Teile des Mineralpulvers und 500 - 0 Teile Zuschlagstoff aufweisen.

6. Verfahren nach einem der Ansprüche 1 bis 5, bei dem das verglasbare, anorganische Pulver aus Glaspulver, Feldspatpulver und Mischungen derselben ausgewählt wird.

7. Verfahren nach einem der Ansprüche 1 bis 6, bei dem die Oberfläche der auftretenden Ausblühungen 3 % oder weniger der gesamten Oberfläche des Keramikgegenstands beträgt.

8. Zemententhaltender, hochfester, glasartig gebundener Keramikgegenstand, der hinsichtlich auf seinen Oberflächen auftretenden Ausblühungen verbessert ist: welcher Keramikgegenstand durch Brennen eines vorab abgebundenen, geformten Gegenstandes bis zu einer Temperatur von nicht weniger als 1000°C erhalten wurde, wobei der geformte Gegenstand einen anorganischen, wasserabbindbaren Zement, ein in der Hitze verglasbares, anorganisches Pulver und eine Mineralpulverkomponente enthält, die aus der Gruppe mit einem Magnesiumsilikatmineral, einem aktiven Kieselerdemineral, einem Aluminiumsilikatmineral und Mischungen derselben ausgewählt wurde, wobei die Mineralpulverkomponente eine mittlere Teilchengröße von nicht mehr als 100 µm (Mikrometer) aufweist, um gute Sinter- oder Reaktionseigenschaften zu zeigen;
wobei die Mineralpulverkomponente dazu dient, mit basischen Komponenten im Gegenstand zu reagieren und Ausblühungen zu verringern, die auf dem gebrannten Keramikgegenstand auftreten.

9. Keramikgegenstand nach Anspruch 8, bei dem die Magnesiumsilikatmineralkomponente aus Serpentin, Steatit und Mischungen desselben ausgewählt ist, und das aktive Kieselerdemineral und/oder das Aluminiumsilikatmineral aus fein verteilter Kieselerde, amorpher Kieselerde, Agalmatolit und Mischungen derselben ausgewählt ist.

10. Keramikgegenstand nach Anspruch 8 oder Anspruch 9, bei dem die Ausgangsmaterialien für den Keramikgegenstand gewichtsmäßig 100 Teile anorganischen, wasserabbindbaren Zements, 50 - 300 Teile verglasbares, anorganisches Pulver, 20 - 400 Teile des Mineralpulvers und 500 - 0 Teile Zuschlagstoff aufweisen.

11. Keramikgegenstand nach einem der Ansprüche 8 bis 10, bei dem die Oberfläche, auf der Ausblühungen auftreten, 3 % oder weniger der gesamten Oberfläche des Keramikgegenstandes ist.

12. Keramikgegenstand nach einem der Ansprüche 8 bis 11, wobei der Gegenstand eine Glasurschicht auf einer gewünschten seiner Oberflächen hat.

## Revendications

1. Procédé de fabrication d'un article de céramique à collage vitreux contenant du ciment, comprenant le moulage d'un brasage de mélange contenant un ciment hydraulique inorganique, une quantité de collage vitreux d'une poudre inorganique vitrifiable à la chaleur, et de l'eau ; le durcissement préliminaire de l'article moulé par hydratation ; puis la cuisson de l'article hydraté à une température maximum ne descendant pas au-dessous de 1 000°C, caractérisé en ce que le brasage de mélange comprend en outre une poudre minérale choisie dans le groupe constitué d'un minéral de silicate de magnésium, d'un minéral de silice actif, d'un minéral de silicate d'aluminium, et de mélanges de ces minéraux ; la poudre minérale présentant une taille de particules moyenne ne dépassant pas 100 x 10⁻⁶ m de manière à présenter de bonnes propriétés de frittage ou de réaction ; et en ce que la poudre minérale sert à diminuer l'efflorescence apparaissant sur l'article de céramique cuit.

2. Procédé selon la revendication 1, caractérisé en ce que la poudre minérale comprend un minéral de silicate de magnésium ainsi qu'un minéral de silicate d'aluminium et/ou un minéral de silice actif.

3. Procédé selon l'une quelconque des revendications 1 et 2, caractérisé en ce que le minéral de silicate de magnésium est choisi parmi la serpentine, le talc et des mélanges de ces éléments, et en ce que le minéral de silice actif et/ou le minéral de silicate d'aluminium est choisi parmi la silice finement divisée, la silice amorphe, l'agalmatolite, et des mélanges de ces éléments.

4. Procédé selon l'une quelconque des revendications 1 à 3, caractérisé en ce que l'article moulé préliminairement hydraté est recouvert d'un agent de vitrification sur une surface voulue de celui-ci puis ensuite cuit.

5. Procédé selon l'une quelconque des revendications 1 à 4, caractérisé en ce que les matières premières pour la fabrication de l'article de céramique comprennent, en poids, 100 parties de ciment hydraulique inorganique, 50 à 300 parties de poudre inorganique vitrifiable, 20 à 400 parties de la poudre minérale, et 500 à 0 parties d'agrégat.

6. Procédé selon l'une quelconque des revendications 1 à 5, caractérisé en ce que la poudre inorganique vitrifiable est choisie parmi la poudre de verre, la poudre de feldspath, et des mélanges de ces éléments.

7. Procédé selon l'une quelconque des revendications 1 à 6, caractérisé en ce que la zone de surface de l'efflorescence qui apparaît représente 3 % ou moins de la zone de surface totale de l'article de céramique.

8. Article de céramique à collage vitreux et à haute résistance contenant du ciment dont on améliore l'efflorescence apparaissant sur ses surfaces : cet article de céramique ayant été obtenu par cuisson d'un article moulé préliminairement durci à une température ne descendant pas au-dessous de 1 000°C, l'article moulé comprenant un ciment hydraulique inorganique, une poudre inorganique vitrifiable à la chaleur et un composant de poudre minérale choisi dans le groupe constitué d'un minéral de silicate de magnésium, d'un minéral de silice actif, d'un minéral de silicate d'aluminium et de mélanges de ces minéraux ; et l'élément de poudre minérale présentant une taille de particules moyenne ne dépassant pas 100 x 10⁻⁶ m pour présenter de bonnes propriétés de frittage ou de réaction, caractérisé en ce que le composant de poudre minérale sert à réagir avec les composants de base de l'article et à diminuer l'efflorescence apparaissant sur l'article de céramique cuit.

9. Article de céramique selon la revendication 8, caractérisé en ce que le composant minéral de silicate de magnésium est choisi parmi la serpentine, le talc et des mélanges de ces éléments, et en ce que le minéral de silice actif et/ou le minéral de silicate d'aluminium est choisi parmi la silice finement divisée, la silice amorphe, l'agalmatolite, et des mélanges de ces éléments.

10. Article de céramique selon l'une quelconque des revendications 8 et 9, caractérisé en ce que les matières premières destinées à la fabrication de l'article de céramique comprennent, en poids, 100 parties d'un ciment hydraulique inorganique, 50 à 300 parties d'une poudre inorganique vitrifiable, 20 à 400 parties de la poudre minérale, et 500 à 0 parties d'un agrégat.

11. Article de céramique selon l'une quelconque des revendications 8 à 10, caractérisé en ce que la zone de surface de l'efflorescence qui apparaît représente 3 % ou moins de la zone de surface totale de l'article de céramique.

12. Article de céramique selon l'une quelconque des revendications 8 à 11, caractérisé en ce que cet article est recouvert d'une couche vitrifiée sur une surface voulue de celui-ci.
